# EUROPEAN PATENT SPECIFICATION

(11) **EP 1 007 478 B1**
(45) Date of publication and mention of the grant of the patent: **20.08.2003**
(21) Application number: 97943068.3
(22) Date of filing: 29.09.1997
(51) Int. Cl.: C02F 1/46

(54) **ELECTROCHEMICAL PROCESSING OF LIQUID SUCH AS WATER**
ELEKTROCHEMISCHE BEHANDLUNG VON FLÜSSIGKEITEN Z.B. WASSER
TRAITEMENT ELECTROCHIMIQUE D'UN LIQUIDE TEL QUE L'EAU

(30) Priority: 27.09.1996 GB 9620167
(43) Date of publication of application: 14.06.2000
(73) Proprietor: Sterilox Technologies International Limited, Abingdon, Oxfordshire OX14 4RY (GB)
(72) Inventor: BORWICK, Robert Norman, Nat. Agricultural Centre, Warwickshire CV8 2LZ (GB); STOLLARD, Rosalyn Jean, Nat.Agriculture Centre, Warwickshire CV8 2LZ (GB); ROBINSON, Stewart Charles, Nat. Agriculture Centre, Warwickshire CV8 2LZ (GB); BAKHIR, Vitold Mikhailovich, Moscow, 129301 (RU); ZADOROZHNY, Jury Georgievich, Moscow, 129301 (RU)
(74) Representative: Caldwell, Judith Margaret
(86) International application number: GB9702666
(87) International publication number: WO98013304

(56) References cited:
- EP-A- 0 569 596
- EP-A- 0 612 694
- US-A- 4 904 357
- US-A- 5 427 667
- US-A- 5 628 888
- PATENT ABSTRACTS OF JAPAN vol. 096, no. 011, 29 November 1996 & JP 08 173964 A (MATSUSHITA ELECTRIC WORKS LTD), 9 July 1996,
- PATENT ABSTRACTS OF JAPAN vol. 096, no. 002, 29 February 1996 & JP 07 265861 A (JIPUKOMU KK), 17 October 1995,

## Description

The invention relates to apparatus for and a method of electrochemical processing of a water, -based electrolyte for producing potable water, disinfection, sterilising or washing/extraction solutions.

US Patent No. 4,904,357 describes the preparation of quaternary ammonium and quaternary phosphonium borohydrides from their corresponding boron oxides using an electrolytic process in a closed system. A quaternary ammonium or a quaternary phosphonium salt compound is fed to the anode chamber while a quaternary ammonium or a quaternary phosphonium boron oxide is fed to the cathode chamber. A current is passed through the cell to produce quaternary ammonium borohydride or quaternary phosphonium borohydride in the cathode chamber. At least a portion of the catholyte is removed from the cathode chamber and transferred to a 'recovery zone' where the desired borohydride product is recovered and the remaining solution recycled to the anode chamber. At least a portion of the anolyte is removed and transferred to a 'boron oxide compound make up zone' before being recycled to the cathode chamber.

EP 0474936 describes the use of an electrochemical process to purify chromium-containing wastes in which hexavalent chromium is converted to the less toxic trivalent chromium by electrolysis. Trivalent chromium is precipitated out of solution and immobilised in the pores of a porous carbon electrode, leaving a purified waste. When the purified waste is too alkaline to be discharged after electrolysis, the waste from the cathode compartment is neutralised by being passed through the anode compartment of the electrolytic cell.

In US Patent No. 5,635,040, an electrolyser is described. The electrolysing device of US 5,635,040 comprises two vertical coaxial electrodes in the form of a cylinder and a coaxial rod between which is interposed an ultra-filtering diaphragm. An anode chamber is defined between the other of the electrodes and the diaphragm. In use, an electrolyte passes through the electrolyser and electric current is applied to the electrodes. The required treated water emerges as an anolyte from the anode chamber or catholyte from the cathode chamber.

US 5,427,667 describes a similar electrolytic cell in which the electrochemical treatment of water is effected during a single passage of water upwards through the cathode and anode chambers to produce anolyte and catholyte solutions.

JP 07265861 also describes a similar cell in which the sterilising properties of the acidic anolyte and alkaline catholyte are controlled by the relative discharge rates from the anode and cathode chambers.

EP 0612694 teaches that the degree of water electrolysis may controlled by regulating the amount of electrolyte added to raw water before the water/electrolyte mix is supplied to the electrolytic cell, regulating the flow of water/electrolyte discharged from the cell and/or varying the capacity of the anode and/or cathode chambers. EP 0569596 controls the pH of the electrolysed water by detecting the pressure of the source water and regulating the voltage passed across the electrolytic cell.

JP 08173964 is concerned with an electrolytic water-producing apparatus that informs the user when the apparatus requires cleaning and the removal of scale. The apparatus memorises the correlation between a flow rate and the electrolytic current when the apparatus is first used and compares the value with the electrolytic current and corresponding flow rate as the apparatus is used.

One object of the present invention is to provide apparatus for electrochemical processing of liquid which can use an electrolyser of the type shown in US Patent No. 5,635,040.

According to a first aspect of the invention there is provided a method of electrochemical processing of a water-based electrolyte to produce potable water or disinfection, sterilising or washing/extraction solutions, comprising providing an electrolyser having cathode and anode chambers, the chambers including respective electrodes, providing an electric current source for the electrodes of the cathode and anode chambers, supplying to the electrolyser electrolyte to be subjected to the electrochemical processing, characterised in that at least part of the catholyte from the cathode chamber is passed through the anode chamber and the flow rate of the at least part of the catholyte from the cathode chamber is altered thereby to control the pH of anolyte produced from the anode chamber, the remainder flowing along a further flow path.

According to a second aspect of the invention there is provided an apparatus for electrochemically processing a water-based electrolyte comprising an electrolyser having cathode and anode chambers, means for providing an electric current source for the electrodes of the chambers, means for causing catholyte from the cathode chamber to flow at least partly to the anode chamber, means for causing the remainder flowing along a further flow path, and means for altering the flow rate of catholyte passing into the anode chamber from the cathode chamber to control the pH of the anolyte.

The further flow path may include flow control means, such as a flow adjuster, for controlling flow along the further path.

The aforesaid means for causing flow of liquid at least partly from the cathode to the anode and partly along the further flow path may comprise a device having a substantially unrestricted inlet for the liquid from said cathode and first and second outlets one of which may provide a greater resistance to flow therethrough than the other.

Means may be provided for sensing the pH value of a solution being treated by the processed liquid so that if the pH value changes from a predetermined value, control means such as the aforesaid flow control means may be adjusted to control the rate of liquid flow along the further path which preferably alters the flow rate of liquid from the cathode chamber to the anode chamber of the electrolyser. The means for sensing the pH value may also be used for determining the pH of the processed liquid and controlling the pH by using the aforesaid flow control means.

Means may also be provided for sensing Redox or oxidant values of the solution being treated by the processed liquid whereby if the value varies from a predetermined value, the processing of the liquid is stopped to maintain the value of the treated' liquid and then started again when required.

Electrolyte, for example in the form of a saline solution, may be drawn from a supply by supply means such as a peristaltic pump.

The electrolyte may be fed by the supply means to a mixing device such as an T-junction which receives the liquid to be processed so that the saline solution and liquid to be processed can be mixed together.

Where the apparatus is used for electro-processing water having a significant calcium and/or magnesium content, it is desirable to clean the apparatus to remove calcium deposits which can interfere with liquid flow through the apparatus. Means may be provided for indicating the need to clean the apparatus when resistance to flow increases as a result of the build up of lime scale. In order to clean the apparatus, means maybe provided for introducing a cleaning solution into the apparatus so that the cleaning solution flows through a selected part of the apparatus preferably downstream of the mixing device. In that respect, valve means may be provided for introducing cleaning solution from a suitable source. After cleaning is complete, the method in accordance with the invention preferably includes the step of flushing with liquid such as clean water, those parts of the apparatus which have been cleaned by the cleaning solution.

In order to minimise back pressure through the electrolyser, liquid which flows through the aforesaid further flow path may be drawn along the path by a suitable suction device such as a vortex. In such a case, a non-return valve may be provided in the flow path for the liquid which flows partly to the other chamber of the electrolyser to prevent the suction means from drawing liquid through the electrolyser in a reverse direction.

In a preferred embodiment, two pairs of electrolysers are provided which may be electrically connected in series or parallel. The two pairs of electrolysers are connected so that the anode chambers are connected together in parallel and the cathode chambers are connected together in parallel. It will be appreciated that any convenient number of electrolysers may suitably be connected together.

Preferably, the electrolyser or each of the electrolysers may be an elongate tubular electrolyser preferably of the type disclosed in US Patent No. 5635040 and may extend vertically. In such a case, inlet means to the electrode chambers may be arranged at the lower end of the or each electrolyser and outlet means from the electrode chambers at the upper end.

Preferably, the apparatus is portable for providing, for example, on-the-spot purification of water.

The housing may be divided into upper and lower sections. The upper section may include the aforesaid means for providing the electric current source with the lower section containing the electrolyser and components associated with the liquid flow. The housing may be provided with suitable inlets for the liquid and an electrolyte and suitable respective outlets for the required processed liquid and by-product from the electrolyser.

An apparatus and method in accordance with the invention will now be described by way of example with reference to the accompanying drawings in which:-
Fig 1 is a diagrammatic elevation of one form of apparatus in accordance with the invention,
Fig 2 is a diagrammatic cross-section through an electrolyser suitable for use in the apparatus shown in Fig 1 and
Fig 3 is a flow diagram showing a control sequence of the apparatus.

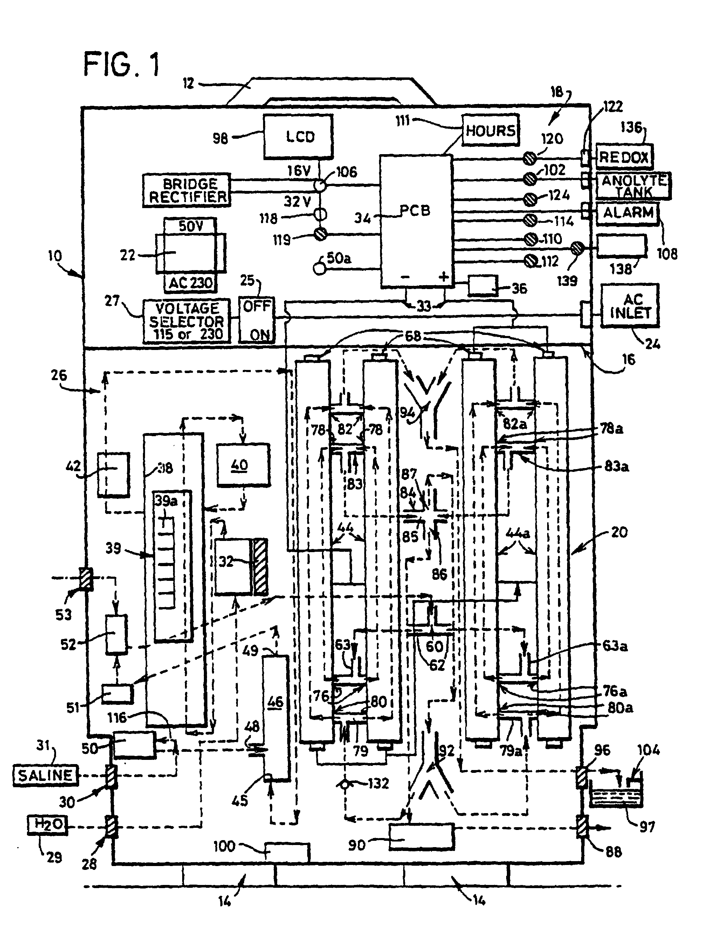

With reference to Fig 1, housing 10 may be provided with a carrying handle 12 and ground engageable feet 14. The housing may be of a rectangular/cuboid type or other suitable shape. If desired, the housing 10 may be provided with ground engageable wheels or castors.

The housing 10 is provided with a horizontal divider 16 which divides the housing into upper and lower sections 18, 20. The upper section 18 contains a transformer 22 which receives power from an external AC source 24 such as mains electricity via an on-off switch 25. The lower section 20 contains liquid ducting and processing components of the apparatus indicated generally at 26. Although liquid flow paths are shown, interconnecting conduit has been omitted. A voltage selector 27 is provided for mains voltages of, say 115v or 230 v.

Looking at the lower section 20, the housing 10 carries a coupling 28 for water from an external source, e.g. from a suitable mains 29, and a further coupling 30 which, in use, is connected to a suitable electrolyte source 31 such as a saline solution. Water from source 29 then flows in the direction of the arrows to a solenoid valve 32 which receives electric current from a controller 34 in the upper section 18 of the housing, the controller 34 being arranged to receive power from the transformer 22. The controller 34 includes a printed circuit board carrying electronic components. An electrical switch 36 such as a press start switch is provided on the housing 10 for operating the solenoid valve 32. The solenoid valve 32 is normally closed when the power is switched off.

When the valve 32 is opened by operating switch 36, water is permitted to flow to a flow gauge 38 of known kind (for example available from CT Platon of Basingstoke England). A suitable flow gauge is the Model GI. From the flow gauge 38, water flows to a flow regulator comprising a flow-stat 40 of known kind available from CT Platon of Basingstoke. A suitable flow-stat is the Model MN. The flow gauge 38 is calibrated, for example to allow water to flow therethrough at 0.2 - 1.5 litres per minute. The system shown in Fig 1 is preferably set to indicate a flow requirement of 1 to 1.5 litre per minute through the flow gauge 38. The flow-stat 40 is set to provide the desired flow rate of 1 to 1.5 litre per minute and will maintain a substantially constant flow irrespective of any change of pressure of the water entering through the inlet 28. The flow gauge 38 has a window 39 having flow rate graduations 39a at which the rate of flow is indicated.

A flow switch 42 receives water from the flow-stat 40 and is sensitive to the rate of water flow. The switch 42 will remain open provided that the flow rate therethrough does not fall below a certain value, for example 0.8 litre per minute. However, should the flow rate fall below that value, the flow switch 42 will operate to shut off electricity supply from the controller 34 to the solenoid valve 32 and to two pairs of electrolysers 44, 44a and to a peristaltic pump 50 described below. When switching on the apparatus from switch 25, switch 36 is pressed into an "on" position by-passing flow switch 42 and initiating water flow by operating the solenoid switch 32. The switch 36 is held in its "on" position long enough for a float in the switch 42 to lift from an open contact in the switch as water flows therethrough so that the switch 42 is then placed in a normal operating mode.

From the flow switch 42, water flows to an inlet 45 of a mixing chamber such as an T-junction 46 having a further inlet 48 which receives the saline solution entering through the coupling 30. As the water passes through the T-junction 46 from the inlet 45 towards an outlet 49 at its upper end, the saline solution mixes with the water thereby providing an electrolyte. Preferably, a mixture of 300 - 350 mg/l of brine per litre of water is drawn into the T-junction 46 to mix with the water.

From the T-junction 46, the mixture of water and electrolyte flow via a pressure switch 51, the operation of which is described below. From pressure switch 51, the mixture flows to a two-way valve 52 and then to junction 60, with supply outlets 62 of the junction 60 feeding mixture to junctions 63 and 63a for feeding the two respective pairs of electrolysers 44, 44a.

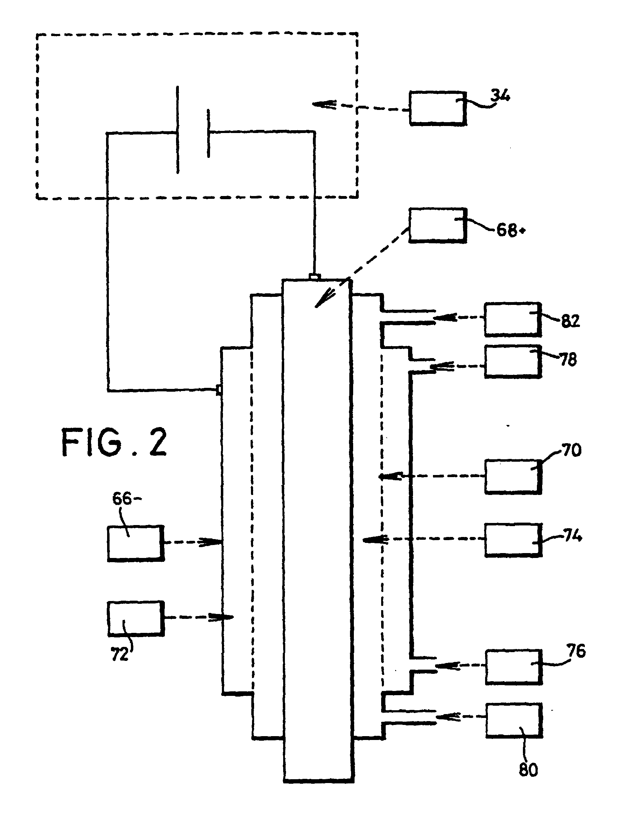

One of the electrolysers of the pair 44 is shown in diagrammatic cross section in Fig 2 and comprises a tubular outer electrode 66 (the cathode), a rod like inner electrode 68 (the anode) spaced from the electrode 66 and a tubular diaphragm 70 arranged between the electrodes 66, 68 so as to divide the space therebetween into a cathode chamber 72 and an anode chamber 74. The diaphragm 70 may be made of a ceramic based on, for example, zirconium oxide, and is an ultra- filtering type. The electrolyser shown in Fig 2 is of a known kind and is preferably of the type disclosed in US Patent No. 5635040. The anode chamber 74 has an inlet 80 and an outlet 82 and the cathode chamber has an inlet 76 fed from junction 63 and an outlet 78. The anode 68 and cathode 66 receive electric current as shown from the controller 34 via leads 33. The liquid flow paths of the two electrolysers of each pair are connected in parallel.

The liquid entering each cathode chamber 72 flows upwardly and leaves through the outlets 78, 78a. Junctions 83, 83a receive the liquid leaving the cathode chambers 72 as a catholyte and direct it to a four-way junction 84. The catholyte enters the junction 84 through substantially unrestricted inlets 85 and leaves through a restricted outlet 86 and a substantially unrestricted outlet 87. Catholyte passing through outlet 86 passes to an outlet 88 on the housing 10 via a flow adjuster 90. From the outlet 88, the catholyte can be collected in a suitable vessel. Catholyte passing through the outlet 87 passes to a Y junction 92 where the flow is split and directed to the inlets 80, 80a of junctions 79, 79a for the anode chambers 74 of electrolysers 44, 44a. The liquid flows upwardly through the anode chambers 74 and leaves as an anolyte through the outlets 82, 82a at the upper ends thereof. From there, the anolyte enters a further Y junction 94 which directs the anolyte to an outlet 96 on the housing 10 for collection in a suitable vessel 97.

There are four types of solution that can be produced by the apparatus described, ie three types of anolyte and a catholyte. The first is an alkaline anolyte of pH 7-8. The procedure for making an alkaline anolyte is to shut off pinch valve 90 so directing all the alkaline catholyte solution made in the cathode chambers 72 for re-processing in the anode chambers 74.

The second type of anolyte is a neutral anolyte of pH 6-7. To make a neutral anolyte the pinch valve 90 is opened slightly to allow a flow of catholyte to pass to outlet 88. The amount varies and should be adjusted to give a pH of 6-7. If the pH is above 7 the valve 90 is opened a little more and so the pH will drop. If the pH is below 6 the pinch valve 90 is open too far and should be closed a little.

The third type of anolyte is an acid anolyte pH varying between 2 and 6. For this type the valve 90 is opened fully to allow half the catholyte flow to pass to outlet 88 and half the flow to be directed into the anode chambers 72 of the electrolysers 44, 44a for activation and creation of the acidic anolyte. pH values for the various types of anolyte together with Redox readings are set out below.

The fourth type of solution produced is catholyte with a pH of 11 to 12 and a Redox Potential of -600 to -900. The catholyte solutions also have processing applications and are collected from outlet 88.

The four types of solution are set out in summary below:-

| | pH | REDOX |
|---|---|---|
| Alkaline anolyte | 7.5 - 9 | +400 to +700 mV |
| Neutral anolyte | 5.5 - 7.5 | +600 to +900 mV |
| Acid anolyte | 2 - 5.5 | +900 to +1200 mV |
| Catholyte | 11 - 12 | -600 to -900 mV |

The valve 90 may be operated automatically as described below.

Within the electrolysers 44, 44a, the saline mixture is subjected to a voltage of 16 or 32 volts in the example shown. A three position voltage selector switch 106 (eg 16 volt position, 32 volt position and a centre OFF position) is provided for that purpose. The electrolysers 44, 44a may use about 50 watts each of electricity i.e. a total of 200 watts per hour at a reading of 10 amps shown at an LCD display 98 on the housing 10. The solenoid valve 32 is activated by a voltage of around 24 volts DC or AC

The flow switch 42 operates and causes the controller 34 to shut off power to the electrolysers 44, 44a due to a fall in flow rate below a given rate, eg 0.8 l/min. An indication of that is provided by a lamp 110. This mode also cuts the power to the solenoid valve 32 to prevent water flow through the apparatus and the power to the peristaltic pump 50 is also shut down to prevent operation of the pump 50.

Due to calcium and magnesium carbonate being deposited as scale on the walls of the cathode chambers 72, flow rates therethrough will be reduced and periodic cleaning is required. Cleaning is recommended every 40 hours with the example shown and the number of operating hours is indicated at an LED indicator 111 on the housing 10. When flow rate falls due to a build up of scale an LED indicator 112 is illuminated to show that cleaning is required. If a soft or calcium free water is used as the source at 29, cleaning may be carried out at less frequent intervals.

Cleaning is a very simple procedure. The pressure switch 51 will operate to prevent functioning of the apparatus when cleaning is imperative. To clean the apparatus the power is turned off with switch 25. The two-way valve 52 is turned to a cleaning position to allow cleaning solution to enter the apparatus through inlet 53 and prevent cleaning solution from entering the upstream water and saline flow paths. In that way cleaning solution is circulated only through the electrolysers 44, 44a and connecting pipe-work to normal outlets at 88 and 96. Cleaning solution is preferably 10% hydrochloric acid. Prior to introducing acid into the apparatus we prefer to drain out the liquid present in the electrolysers 44, 44a to prevent dilution and inactivation of the acid. Acid is then connected and fed into inlet 53 from a small external acid reservoir tank (not shown) and proceeds to the two-way valve 52 which directs it along normal downstream flow paths. From outlets 88 and 96 the acid can be piped back to the acid reservoir tank. Pinch valve 90 needs to be just partially open to ensure acid also circulates in the anode chambers of the electrolysers 44,44a. Acid is pumped until no gas bubbles are visible in the acid at outlets 88 and 96.

The two-way valve 52 is then turned back to its original position. It is then necessary to pass the acid in the unit to waste and flush out the electrolysers 44,44a with clean water. The power is then restored to the apparatus by operating switch 25. A control panel switch 118 is then moved from a processing to a flushing position. That opens the solenoid valve 32 to allow only water to flow through the apparatus and flush out the acid for several minutes. To recommence processing of the water the switch 118 is restored to its processing position. When switch 118 is in the flushing position, an LED light 119 will illuminate. Where the pressure switch 51 operates to switch off the apparatus a lamp 112 associated with the switch 51 will flash.

The salt used to make up a saline solution needs to be as pure as possible. Ideally a 99.9% pure salt is best and, by using such a salt, deposits in the electrolysers 44, 44a and connecting pipes will be greatly reduced.

The apparatus is not powered during the cleaning operation and cleaning is a totally separate operation. The acid acting on the carbonates will generate gas bubbles at outlet 88 and 96 and cleaning is complete when the air bubbles stop flowing from that outlet

In certain cases, the presence of calcium or other natural minerals in the water will in itself provide sufficient electrolyte to enable a useful anolyte solution to be obtained. In such cases, a suction pipe 116 from the peristaltic pump 50 needs to be immersed in the water instead of a saline solution.

An LCD display 98 provides an indication of current flow through the electrolysers 44, 44a. Flow of current through the electrolysers will be dependent upon the amount of saline in the mixture delivered to the electrolysers. As mentioned above, the saline solution is delivered to the T-junction 46 by the peristaltic pump 50.

We prefer to insert a non-return valve 132 in the flow path between the flow adjuster 90 and the junction 79 to prevent the risk of reverse flow of liquid through the electrolysers 44, 44a.

The apparatus can be operated either manually or automatically. For manual operation, switch 25 is operated to provide mains electricity to the transformer 22. The switch 36 is then operated so that water and saline begin to flow through the apparatus. The flow switch 42, pressure switch 51 and sensors 100 and 104 will operate to control operation of the apparatus as described above when working in the manual mode of operation.

Instead of operating manually, the system can operate automatically by providing an external Redox analyser 136 which receives 24 volts DC power from the controller 34 where indicated at 122. A pH analyser 138 is also connected to the controller 34. Both the Redox analyser 136 and the pH analyser 138 are set to sense desired Redox and pH values and are connected to probes (not shown) which sense the Redox value and the pH value of the solution being treated. Where the Redox level exceeds a preset level, a signal from the Redox analyser 136 will cause the controller 34 to switch off the apparatus downstream of switch 106 and to switch it on again when the Redox level falls below the present level. An LED 120 illuminates during that period. Where the pH value of the anolyte changes from a preset level, the pH analyser 138 will cause the controller 34 to alter the setting of flow adjuster 90 to change the pH value. An LED 139 illuminates when the pH probe is in use. A timer can be used instead of a Redox sensor and which is connected at 122 to the controller 34. The timer switches the apparatus on and off as required to maintain oxidant level in the treated solution.

Instead of using the flow gauge 38 and the flow stat 40, the two items can be replaced by a single flow control unit providing a fixed flow rate of fluid therethrough.

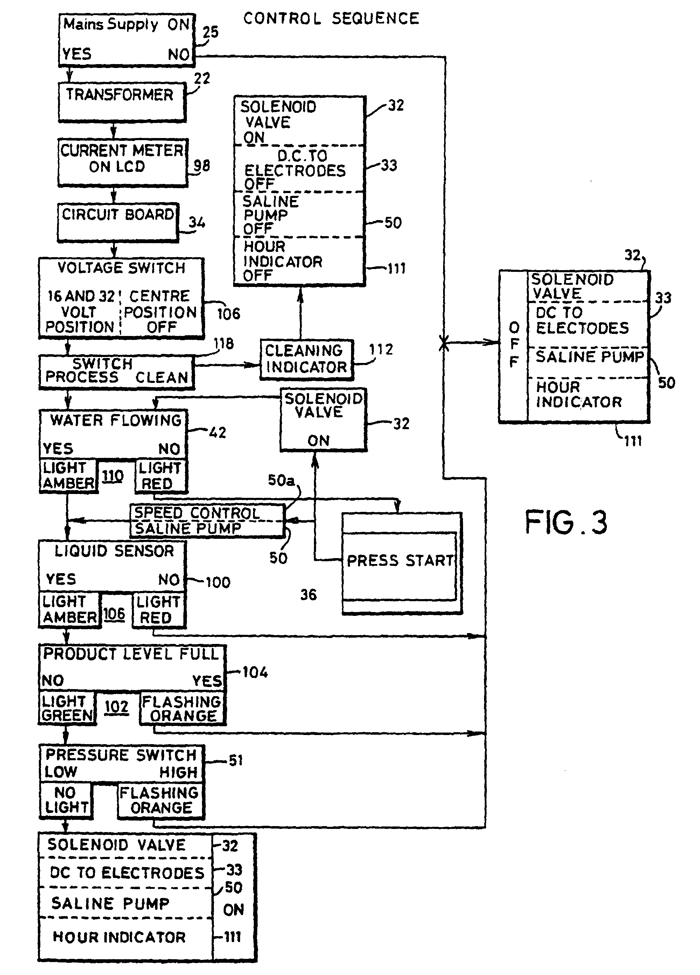

Fig 3 shows a typical control sequence for the apparatus shown in Fig 1 and illustrates the way in which the system will be switched off in certain prevailing conditions and the operation of the various switches and sensors during the operation of the apparatus.

Power regulators (not shown) are provided to regulate the two voltages of 16 or 32 for the controller 34. To protect the power regulators cut-outs have been incorporated to operate at 16 Volts 15 amps and 32 Volts 11 amps. Should those current values be exceeded then the controller 34 will shut down power to the apparatus and an LED 124 will light up. To restore the power supply the controller 34 must be switched off at switch 25 and then switched on again.

A 24 Volt DC supply is also available from the controller 34 to supply power to an external water pump for supplying liquid to the apparatus when mains water pressure is not available.
The apparatus may be operated remotely with the switches 25, 36 and the various LED's and other indicators being arranged conveniently on a suitable remotely located console. The console can then be suitably connected electrically to the remainder of the apparatus.

The apparatus in accordance with the invention can be made particularly compact and portable for easy movement of the apparatus from one place to another.

The portable nature of the apparatus is useful when water purification is required at remote locations such as villages in third world countries where the apparatus can be used to purify a local water supply. In such a case, the electricity supply 24 can be provided by means of a portable generator and water can be pumped, say, from the river to the inlet coupling 28 on the housing 10.

## Claims

1. A method of electrochemical processing of a water-based electrolyte to produce potable water or disinfection, sterilising or washing/extraction solutions, comprising providing an electrolyser having cathode and anode chambers, the chambers including respective electrodes, providing an electric current source for the electrodes of the cathode and anode chambers, supplying to the electrolyser electrolyte to be subjected to the electrochemical processing, **characterised in that** at least part of the catholyte from the cathode chamber is passed through the anode chamber and the flow rate of the at least part of the catholyte from the cathode chamber is altered thereby to control the pH of anolyte produced from the anode chamber, the remainder flowing along a further flow path.

2. A method according to claim 1, in which the pH of the anolyte being treated by the catholyte is measured and the rate of catholyte flow from the cathode chamber to the anode chamber is adjusted accordingly.

3. A method according to claim 1 or 2 in which the redox or oxidant value of the anolyte being treated by the catholyte is measured.

4. A method according to claim 3 wherein the processing of electrolyte is stopped to maintain the redox or oxidant value and started again when required.

5. A method according to any preceding claim in which the method further comprises the step of sensing when the electrolyser needs to be cleaned and cleaning the electrolyser by flushing with a cleaning fluid.

6. A method according to claim 5 in which the cleaning method includes the further step of flushing the electrolyser with clean water after cleaning with a cleaning solution.

7. A method according to any of claims 1 to 4 in which the water-based electrolyte comprises a brine/water mixture.

8. A method according to claim 7 in which the step of passing at least part of the electrolyte from the cathode chamber to the anode chamber comprises causing all of the catholyte from the cathode chamber to flow to the anode chamber so as to produce a solution from the anode chamber which is alkaline, having a pH in the range 7.5 to 9 and a redox value in the range +400 to +700 mV.

9. A method according to claim 7 in which the step of passing at least part of the electrolyte from the cathode chamber to the anode chamber comprises causing a relatively larger proportion of the catholyte from the cathode chamber to flow to the anode chamber so as to produce an anolyte solution from the anode chamber having a substantially neutral pH in the range 5.5 to 7.5 and a redox value in the range +600 to +900 mM.

10. A method of electrochemical processing of liquid according to claim 7 in which the step of passing at least part of the catholyte from the cathode chamber to the anode chamber comprises causing half of the catholyte from the cathode chamber to flow to the anode chamber so as to produce an anolyte solution from the anode chamber having an acid pH in the range 2 to 5.5 and a redox value in the range +900 to +1200 mV.

11. A method according to claim 7 in which the step of passing at least part of the catholyte from the cathode chamber to the anode chamber comprises causing a smaller proportion of the catholyte from the cathode chamber to flow to the anode chamber, a larger proportion of the catholyte flowing along a further flow path so as to produce a catholyte solution having a pH in the range 11 to 12 and a redox value in the range -600 to -900 mV.

12. An apparatus for electrochemically processing a water-based electrolyte comprising an electrolyser having cathode and anode chambers, means for providing an electric current source for the electrodes of the chambers, means for causing catholyte from the cathode chamber to flow at least partly to the anode chamber, means to cause the remainder flowing along a further flow path, and means for altering the flow rate of catholyte passing into the anode chamber from the cathode chamber to control the pH of the anolyte.

13. An apparatus according to claim 12 in which the further flow path includes flow control means, such as a flow adjuster, for controlling flow along the further path.

14. An apparatus according to claim 12 or 13 in which the aforesaid means for causing flow of catholyte from the cathode chamber at least partly to the anode chamber and partly along the further flow path comprises a device having a substantially unrestricted inlet for the catholyte from said cathode chamber and first and second outlets one of which may provide a greater resistance to flow therethrough than the other.

15. An apparatus according to any of claims 12, 13 or 14 provided with sensing means for sensing the pH value of anolyte being treated by the catholyte and control means, such as the aforesaid flow control means, for controlling the rate of catholyte flow along the further path, so that if the pH value changes from a predetermined value, the control means alters the flow rate of catholyte from the cathode chamber to the anode chamber of the electrolyser.

16. An apparatus according to any of claims 12 to 15 in which means is provided for sensing redox value of the anolyte being treated by the catholyte whereby if the redox value varies from a predetermined value, the processing of the electrolyte is stopped to maintain the redox value of the treated anolyte and then started again when required.

17. An apparatus according to any of claims 12 to 16 further comprising a pump to draw the electrolyte from a supply

18. An apparatus according to claim 17 in which the pump is a peristaltic pump.

19. An apparatus according to any of claims 12 to 18 further comprising a mixing device, such as a T-junction, which receives water and a saline solution for mixing with the water to form the water-based electrolyte, the saline solution and water being mixed together in the mixing device.

20. An apparatus according to any of claims 12 to 19 in which means is provided for indicating the need to clean the apparatus when resistance to flow increases as a result of the build up of lime scale.

21. An apparatus according to any of claims 12 to 20 where a mixing device is provided for mixing water and electrolyte and in which cleaning means is provided for introducing cleaning solution into the apparatus so that the cleaning solution flows through a selected part of the apparatus preferably downstream of the mixing device.

22. An apparatus according to claim 21 in which said cleaning means includes valve means for introducing cleaning solution from a suitable source.

23. An apparatus according to any of claims 12 to 22 in which a suction device, such as a vortex, is provided for drawing the catholyte, which flows through the aforesaid further path, along the path.

24. An apparatus according to claim 23 in which a non-return valve is provided in the flow path for the liquid which flows partly to the anode chamber of the electrolyser to prevent the suction device from drawing liquid through the electrolyser in the reverse direction.

25. An apparatus according to claim 24 in which a non-return valve is provided in the flow path for the catholyte which flows partly to the anode chamber of the electrolyser to prevent the suction device from drawing liquid through the electrolyser in a reverse direction.

26. An apparatus according to any of claims 12 to 25 in which two pairs of electrolysers are provided.

27. An apparatus according to claim 26 in which the two pairs of electrolysers are connected so that the anode chambers are connected together in parallel and the cathode chambers are connected together in parallel.

28. An apparatus according to any of claims 12 to 27 in which the apparatus is portable.

29. An apparatus according to claim 28 provided in a housing having suitable inlets for the water and an electrolyte and suitable respective outlets for the required anolyte or catholyte and by-product from the electrolyser.

## Patentansprüche

1. **Verfahren** zur elektrochemischen Bearbeitung eines wasser-basierten Elektrolyts zur Erzeugung von Trinkwasser oder trinkbarem Wasser oder zur Desinfektion, Sterilisation oder zum Waschen oder Extrahieren von Lösungen, bei welchem Verfahren eine Elektrolyseeinrichtung mit einer Kathodenkammer sowie Anodenkammer zur Verfügung gestellt wird, wobei die Kammern jeweilige Elektroden beinhalten, wobei ein elektrischer Strom oder eine Stromquelle für die Elektroden der Anodenkammer und der Kathodenkammer zur Verfügung gestellt wird, wobei der Elektrolyt zur Elektrolyse zugeführt wird, um ihn dem elektrochemischen Prozess zu unterwerfen, **dadurch gekennzeichnet, dass** zumindest ein Teil des Katholyten von der Kathodenkammer durch die Anodenkammer geleitet oder geführt wird und die Flussrate des zumindest einen Teils des Katholyten von der der Kathodenkammer geändert wird, um den pH-Wert des Anolyten zu steuern, der von der Anodenkammer erzeugt wird, und wobei der Rest einen anderen Fluss- oder Strömungspfad nimmt.

2. Verfahren nach Anspruch 1, in welchem der pH-Wert des Anolyten, der von dem Katolyten behandelt wird, gemessen wird, und die Rate des Katholyt-Flusses von der Kathodenkammer zu der Anodenkammer entsprechend angepasst oder gesteuert oder eingestellt wird.

3. Verfahren nach Anspruch 1 oder 2, in welchem der Redox-Wert oder der Oxidanz-Wert des Anolyten, der von dem Katolyten behandelt wird, gemessen wird.

4. Verfahren nach Anspruch 3, wobei die Bearbeitung des Elektrolyten angehalten oder gestoppt wird, um den Redox-Wert oder den Oxidanz-Wert beizubehalten oder aufrecht zu erhalten, und dann - wenn benötigt - wieder begonnen oder gestartet wird.

5. Verfahren nach einem der vorigen Ansprüche, wobei das Verfahren weiter den Schritt des Messen s oder Erfassens beinhaltet, wenn oder wann die Elektrolyseeinrichtung zu reinigen ist oder gereinigt werden muß und sie durch Spülen mit einem Spülfluid gereinigt wird.

6. Verfahren nach Anspruch 5, wobei das Reinigungsverfahren einen weiteren Schritt des Spülens der Elektrolyseeinrichtung mit sauberem Wasser beinhaltet, nach einem Säubern oder Spülen mit einer Spül- oder Säuberungslösung.

7. Verfahren nach einem der Ansprüche 1 bis 4, wobei der wasser-basierende Elektrolyt eine Mischung aus Salz/Sole bzw. Wasser beinhaltet.

8. Verfahren nach Anspruch 7, wobei der Schritt des Weiterleitens oder Durchleitens zumindest eines Teils des Elektrolyten von der Kathodenkammer zu oder in die Anodenkammer das Verursachen des Durchfließens des gesamten Katholyten von der Kathodenkammer zu oder in die Anodenkammer beinhaltet, um eine Lösung von der Anodenkammer zu erzeugen, welche alkalisch ist, mit einem kleinen pH-Wert im Bereich zwischen 7,5 und 9, und einem Redoxwert im Bereich zwischen +400mV und +700 mV.

9. Verfahren nach Anspruch 7, wobei der Schritt des Durch- oder Weiterleitens oder Weitergebens zumindest eines Teils des Elektrolyten von der Kathodenkammer zu der Anodenkammer das Verursachen beinhaltet, eine relativ größere Proportion oder einen größeren Anteil des Katholyten von der Kathodenkammer zu der Anodenkammer strömen zu lassen, um eine anolytische Lösung von der Anodenkammer zu erzeugen, mit einem im wesentlichen neutralen pH-Wert im Bereich zwischen 5,5 und 7,5, und einem Redoxwert im Bereich zwischen +600 mV und +900 mV.

10. Verfahren für eine elektrochemische Bearbeitung einer Flüssigkeit nach Anspruch 7 in welchem der Schritt des Durch- oder Weiterleitens zumindest eines Teils des Katholyten von der Kathodenkammer zu der Anodenkammer das Verursachen beinhaltet, die Hälfte des Katholyten von der Kathodenkammer zur Anodenkammer fließen zu lassen, um eine anolytische Lösung von der Anodenkammer zu erzeugen, welche einen sauren pH-Wert im Bereich zwischen 2 und 5,5 und einen Redoxwert im Bereich zwischen +900 mV und +1200 mV zu erzeugen.

11. Verfahren nach Anspruch 7, wobei im Schritt des Durch- oder Weiterleitens zumindest eines Teils des Katholyten von der Kathodenkammer zu der Anodenkammer das Verursachen beinhaltet, eine kleinere Proportion oder einen kleineren Anteil des Katholyten von der Kathodenkammer zur Anodenkammer fließen zu lassen, einen größeren Anteil oder eine größere Proportion des Katholyten einen anderen Strömungspfad oder solchen Weg fließen zu lassen, um eine katholytische Lösung zu erzeugen mit einem pH-Wert im Bereich von 11 und 12 und einem Redoxwert im Bereich -600 mV und -900 mV.

12. **Einrichtung** zur elektrochemischen Bearbeitung eines wasser-basierten Elektrolyten, mit einer Elektrolyseeinrichtung, welche eine Kathodenkammer und eine Anodenkammer besitzt, wobei ein Mittel zum Bereitstellen eines elektrischen Stromes für die Elektroden der Kammern vorgesehen ist, wobei ein Mittel vorgesehen ist, zum Verursachen des Strömens des Katholyten von der Kathodenkammer zumindest teilweise zu der Anodenkammer, und wobei ein Mittel vorgesehen ist, um zu bewirken, dass der Rest oder der verbleibende Anteil einen anderen Strömungsweg fließt, und mit einem Mittel zum Ändern der Strömungsrate des Katholyten, welcher zur Anodenkammer von der Kathodenkammer geführt oder geleitet wird, um den pH-Wert des Anolyten zu steuern oder einzustellen.

13. Vorrichtung nach Anspruch 12, wobei der weitere Strömungspfad ein Strömungs-Steuermittel beinhaltet, wie einen Strömungseinsteller, welches die Strömung einstellt, zum Steuern des Flusses oder der Strömung längs des weiteren Pfades.

14. Einrichtung nach Anspruch 12 oder 13, wobei die zuvor erwähnten Mittel zur Verursachung des Strömens des Katholyten von der Kathodenkammer zumindest teilweise zu der Anodenkammer, und teilweise längs eines weiteren Strömungspfades eine Einrichtung beinhaltet, welche einen im wesentlichen unbeschränkten Einlaß für den Katholyten von der Kathodenkammer beinhaltet und erste und zweite Auslässe beinhaltet, von denen einer einen größeren Strömungswiderstand aufweist, als der andere.

15. Einrichtung nach einem der Ansprüche 12, 13 oder 14, ausgerüstet mit einer Meß- oder Erfassungseinrichtung, zur Erfassung des pH-Wertes des Anolyten, welcher von dem Katholyten behandelt wird, und mit einer Steuereinrichtung, wie die zuvor erwähnte Strömungs-Steuereinrichtung, zum Steuern der Rate des Flusses des Katholyten längs des weiteren Pfades, so dass - wenn der pH-Wert sich von einem vorbestimmten Wert ändert die Steuereinrichtung die Strömungsrate des Katholyten von der Kathodenkammer zu der Anodenkammer der Elektrolyseeinrichtung ändert.

16. Einrichtung nach einem der Ansprüche 12 bis 15, wobei ein Mittel vorgesehen ist, zur Erfassung oder Mes sung des Redoxwertes des Anolyten, der von dem Katholyten behandelt wird, wobei - wenn der Redoxwert von einem vorbestimmten Wert abweicht - die Verarbeitung der Elektrolyse angehalten wird, um den Redoxwert des behandelten Anolyten aufrecht zu erhalten oder beizubehalten, und dann erneut gestartet wird, wenn benötigt.

17. Einrichtung nach einem der Ansprüche 12 bis 16, weiter beinhaltend eine Pumpe, mit welcher der Elektrolyt von einer Versorgung geholt oder abgezogen wird.

18. Einrichtung nach Anspruch 17, wobei die Pumpe eine Peristaltikpumpe ist.

19. Einrichtung nach einem der Ansprüche 12 bis 18, weiter beinhaltend einen Mischer, wie eine T-Kreuzung oder Verbindung, welche Wasser und eine Salzlösung zum Mischen mit Wasser erhält oder zugeführt wird, um den wasser-basierenden Elektrolyten zu bilden, wobei die Salzlösung und das Wasser in der Mischeinrichtung zusammengemischt werden.

20. Einrichtung nach einem der Ansprüche 12 bis 19, wobei ein Mittel vorgesehen ist, zum Anzeigen der Notwendigkeit der Reinigung der Einrichtung, wenn der Strömungs- oder der Flusswiderstand ansteigt, als Ergebnis des Aufbauens von Kalkablagerungen.

21. Einrichtung nach einem der Ansprüche 12 bis 20, wobei ein Mischer vorgesehen ist, zum Mischen von Wasser und dem Elektrolyten, und wobei eine Säuberungseinrichtung vorgesehen ist, zum Einführen einer Säuberungslösung in die Einrichtung, so dass die Säuberungslösung durch einen ausgewählten Teil oder Abschnitt der Einrichtung fließt, bevorzugt stromabwärts des Mischers.

22. Einrichtung nach Anspruch 21, wobei die Säuberungseinrichtung eine Ventileinrichtung beinhaltet, zum Einführen einer Säuberungslösung von einer geeigneten Quelle.

23. Einrichtung nach einem der Ansprüche 12 bis 22, wobei eine Saugeinrichtung vorgesehen ist, wie eine Wirbeleinrichtung (Vortex), vorgesehen zum Abziehen oder Herbeiholen des Katholyten, welcher durch den vorgenannten weiteren Pfad, längs des Pfades fließt.

24. Einrichtung nach Anspruch 23, wobei ein Rückschlagventil im Strömungspfad für die Flüssigkeit vorgesehen ist, welche teilweise zu der Anodenkammer der Elektrolyseeinrichtung fließt, um zu vermeiden, dass die Saugeinrichtung Flüssigkeit durch den Elektrolyser in rückwärtiger Richtung abzieht oder bewegt.

25. Einrichtung nach Anspruch 24, wobei ein Rückschlagventil im Strömungspfad für den Katholyten vorgesehen ist, welcher zumindest teilweise zur Anodenkammer der Elektrolyseeinrichtung fließt, um zu vermeiden, dass die Saugeinrichtung Flüssigkeit durch die Elektrolyseeinrichtung in umgekehrter Richtung abzieht.

26. Einrichtung nach einem der Ansprüche 12 bis 25, wobei zwei Paare von Elektrolyseeinrichtungen vorgesehen sind.

27. Einrichtung nach Anspruch 26, wobei zwei Paare von Elektrolyseeinrichtungen so verbunden sind, dass die Anodenkammern parallel verbunden sind und die Kathodenkammern parallel verbunden sind.

28. Einrichtung nach einem der Ansprüche 12 bis 27, wobei die Einrichtung tragbar ist.

29. Einrichtung nach Anspruch 28, wobei sie in ein Gehäuse eingebracht ist, welches geeignete Einlässe für Wasser und einen Elektrolyten aufweist, und geeignete jeweilige Auslässe für den benötigten Anolyten oder Katholyten und/oder Nebenprodukt des Elekerolysers beinhaltet.

## Revendications

1. Procédé de traitement électrochimique d'un électrolyte à base d'eau pour produire de l'eau potable ou des solutions de désinfection, de stérilisation ou de lavage/d'extraction, comprenant la fourniture d'un électrolyseur ayant des chambres cathodique et anodique, les chambres comprenant des électrodes respectives, fournissant une source de courant électrique pour les électrodes des chambres cathodique et anodique, fournissant à l'électrolyseur l'électrolyt devant être soumis au traitement électrochimique, **caractérisé en ce qu'**au moins une partie du catholyte de la chambre cathodique traverse la chambre anodique et le débit de ladite au moins une partie du catholyte de la chambre cathodique est ainsi altéré pour contrôler le pH de l'anolyte produit à partir de la chambre anodique, le reste suivant la direction d'une autre trajectoire.

2. Procédé selon la revendication 1, dans lequel le pH de l'anolyte étant traité par le catholyte est mesuré et le débit du catholyte de la chambre cathodique vers la chambre anodique est ajusté en conséquence.

3. Procédé selon la revendication 1 ou la revendication 2, dans lequel la valeur redox ou de l'oxydant de l'anolyte traité.par le catholyte est mesurée.

4. Procédé selon la revendication 3, dans lequel le traitement de l'électrolyte est arrêté pour maintenir la valeur redox ou de l'oxydant et redémarré lorsque nécessaire.

5. Procédé selon l'une quelconque des revendications précédentes, dans lequel le procédé comprend en outre l'étape consistant à détecter le moment où l'électrolyte a besoin d'être nettoyé et à nettoyer l'électrolyseur en rinçant avec un produit de nettoyage.

6. Procédé selon la revendication 5, dans lequel le procédé de nettoyage comprend l'étape supplémentaire consistant à rincer l'électrolyseur avec de l'eau claire après l'avoir nettoyé avec une solution de nettoyage.

7. Procédé selon l'une quelconque des revendications 1 à 4, dans lequel l'électrolyte à base d'eau comprend un mélange de saumure et d'eau.

8. Procédé selon la revendication 7, dans lequel l'étape consistant à faire passer au moins une partie de l'électrolyte de la chambre cathodique vers la chambre anodique comprend l'étape consistant à faire s'écouler tout le catholyte de la chambre cathodique vers la chambre anodique de manière à produire une solution à partir de la chambre anodique qui soit alcaline, ayant un pH compris dans la plage allant de 7,5 à 9 et une valeur redox comprise dans la plage allant de +400 à +700 mV.

9. Procédé selon la revendication 7, dans lequel l'étape consistant à faire passer au moins une partie de l'électrolyte de la chambre cathodique vers la chambre anodique comprend l'étape consistant à faire s'écouler une proportion relativement plus grande du catholyte de la chambre cathodique vers la chambre anodique de manière à produire une solution d'anolyte à partir de la chambre anodique ayant un pH sensiblement neutre compris dans la plage allant de 5,5 à 7,5 et une valeur redox comprise dans la plage allant de +600 à +900 mV.

10. Procédé de traitement électrochimique d'un liquide selon la revendication 7, dans lequel l'étape consistant à faire passer au moins une partie du catholyte de la chambre cathodique vers la chambre anodique comprend l'étape consistant à faire s'écouler la moitié du catholyte de la chambre cathodique vers la chambre anodique de manière à produire une solution d'anolyte à partir de la chambre anodique ayant un pH acide compris dans la plage allant de 2 à 5,5 et une valeur redox comprise dans la plage allant de +900 à +1200 mV.

11. Procédé selon la revendication 7, dans lequel l'étape consistant à faire passer au moins une partie du catholyte de la chambre cathodique vers la chambre anodique comprend l'étape consistant à faire s'écouler une proportion plus petite du catholyte de la chambre cathodique vers la chambre anodique, une proportion plus grande du catholyte dans la direction d'une autre trajectoire d'écoulement de manière à produire une solution de catholyte ayant un pH acide compris dans la plage allant de 11 à 12 et une valeur redox comprise dans la plage allant de -600 à -900 mV.

12. Appareil de traitement électrochimique d'un électrolyte à base d'eau comprenant un électrolyseur ayant des chambres cathodique et anodique, des moyens pour fournir une source de courant électrique pour les électrodes des chambres, des moyens pour faire s'écouler au moins en partie le catholyte de la chambre cathodique vers la chambre anodique, des moyens pour faire suivre la direction d'une autre trajectoire au reste, et des moyens pour altérer le débit du catholyte traversant la chambre anodique à partir de la chambre cathodique pour contrôler le pH de l'anolyte.

13. Appareil selon la revendication 12, dans lequel l'autre trajectoire comprend des moyens de contrôle du débit, tels qu'un régulateur de débit, pour contrôler le débit le long de l'autre trajectoire.

14. Appareil selon la revendication 12 ou la revendication 13, dans lequel les moyens mentionnés ci-dessus pour faire s'écouler au moins en partie le catholyte de la chambre cathodique vers le chambre anodique et en partie le long de l'autre trajectoire comprennent un dispositif ayant une admission sensiblement non limitée pour le catholyte de ladite chambre cathodique et une première et une seconde sortie, l'une d'elles pouvant fournir une meilleure résistance au débit que l'autre.

15. Appareil selon l'une quelconque des revendications 12, 13 ou 14 muni de moyens de détection pour détecter la valeur du pH de l'anolyte étant traité par le catholyte et de moyens de contrôle, tels que les moyens de contrôle du débit mentionnés ci-dessus, pour contrôler le débit du catholyte le long de l'autre trajectoire, de manière à ce que si la valeur du pH change par rapport à une valeur prédéterminée, les moyens de contrôle altèrent le débit du catholyte de la chambre cathodique vers la chambre anodique de l'électrolyseur.

16. Appareil selon l'une quelconque des revendications 12 à 15, dans lequel des moyens sont fournis pour détecter la valeur redox de l'anolyte étant traité par le catholyte, moyennant quoi si la valeur relox change par rapport à une valeur prédéterminée, le traitement de l'électroly est arrêté pour maintenir la valeur redox de l'anolyte traité, puis redémarré lorsque nécessaire.

17. Appareil selon l'une quelconque des revendications 12 à 16, comprenant en outre une pompe pour aspirer l'électolyte à partir d'un point d'alimentation.

18. Appareil selon la revendication 17, dans lequel la pompe est une pompe péristaltique.

19. Appareil selon l'une quelconque des revendications 12 à 18, comprenant en outre un dispositif de mélange, tel qu'une jonction en T, qui reçoit l'eau et une solution saline destinée à être mélangée avec l'eau pour former l'électrolyte à base d'eau, la solution saline et l'eau étant mélangés ensemble dans le dispositif de mélange.

20. Appareil selon l'une quelconque des revendications 12 à 19, dans lequel des moyens sont prévus pour signaler le moment où il est nécessaire de nettoyer l'appareil lorsque la résistance au débit augmente en raison de l'apparition de tartre.

21. Appareil selon l'une quelconque des revendications 12 à 20, dans lequel un dispositif de mélange est prévu pour mélanger l'eau et l'électrolyte et dans lequel des moyens de nettoyage sont prévus pour introduire une solution de nettoyage dans l'appareil de manière à ce que la solution de nettoyage s'écoule à travers une partie sélectionnée de l'appareil de préférence en aval du dispositif de mélange.

22. Appareil selon la revendication 21, dans lequel lesdits moyens de nettoyage comprennent des moyens de soupape pour introduire la solution de nettoyage à partir d'une source adaptée.

23. Appareil selon l'une quelconque des revendications 12 à 22, dans lequel un dispositif d'aspiration, tel qu'un vortex, est fourni pour aspirer le catholyte, qui s'écoule à travers l'autre trajectoire mentionnée ci-dessus, le long de la trajectoire.

24. Appareil selon la revendication 23, dans lequel une soupape de retenue est fournie au niveau de la trajectoire pour le liquide qui s'écoule en partie vers la chambre anodique de l'électrolyseur pour empêcher que le dispositif d'aspiration n'aspirer le liquide à travers l'électrolyseur dans le sens inverse.

25. Appareil selon la revendication 24, dans lequel une soupape de retenue est prévue au niveau de la trajectoire pour la catholyte qui s'écoule en partie vers la chambre anodique de l'électrolyseur pour empêcher que le dispositif d'aspiration n'aspire le liquide à travers l'électrolyseur dans le sens inverse.

26. Appareil selon l'une quelconque des revendications 12 à 25, dans lequel deux paires d'électrolyseurs sont fournies.

27. Appareil selon la revendication 26, dans lequel les deux paires d'électrolyseurs sont reliées de manière à ce que les chambres anodiques soient reliées l'une à l'autre en parallèle et que les chambres cathodiques soient reliées l'une à l'autre en parallèle.

28. Appareil selon l'une quelconque des revendications 12 à 27, dans lequel l'appareil est portatif.

29. Appareil selon la revendication 28 prévu dans un logement ayant des admissions adaptées pour l'eau et un électrolyte et des sorties respectives adaptées pour l'anolyte ou le catholyte requis et les produits secondaires de l'électrolyseur.
